# EUROPÄISCHE PATENTSCHRIFT

(11) **EP 1 290 902 B1**
(45) Veröffentlichungstag und Bekanntmachung des Hinweises auf die Patenterteilung: **28.11.2007**
(21) Anmeldenummer: 01951371.2
(22) Anmeldetag: 12.06.2001
(51) Int. Cl.: H04Q 3/545, H04M 3/24

(54) **VERFAHREN ZUR ÜBERPRÜFUNG VON ÜBERTRAGUNGSKANÄLEN IN EINEM KOMMUNIKATIONSSYSTEM MIT PERIPHEREN BAUGRUPPEN**
METHOD FOR INSPECTING TRANSMISSION CHANNELS IN A COMMUNICATIONS SYSTEM HAVING PERIPHERAL MODULES
PROCEDE DE CONTROLE DE CANAUX DE TRANSMISSION DANS UN SYSTEME DE COMMUNICATION COMPORTANT DES GROUPES PERIPHERIQUES

(30) Priorität: 14.06.2000 DE 10029272
(43) Veröffentlichungstag der Anmeldung: 12.03.2003
(73) Patentinhaber: SIEMENS AKTIENGESELLSCHAFT, 80333 München (DE)
(72) Erfinder: KARL, Michael-Wilhelm, 82024 Taufkirchen (DE); SILBERHORN, Gottfried, 80796 München (DE)
(86) Internationale Anmeldenummer: PCT/DE2001/002173
(87) Internationale Veröffentlichungsnummer: WO 2001/097534

(56) Entgegenhaltungen:
- EP-A- 0 399 359
- DE-A- 2 527 888
- US-A- 4 017 829

## Beschreibung

Periphere Baugruppen dienen einer Schnittstellenbildung zwischen einem Kommunikationssystem und Teilnehmeranschlüssen. Mehrere periphere Baugruppen werden funktionell und konstruktiv zu einer Anschlusseinheit zusammengefasst. Die Anschlusseinheiten können je nach Größe der Kommunikationsanlage wiederum zu Anschlussgruppen zusammengefasst sein und sind über Sprach- und Datenmultiplexkanäle mit einem Koppelnetz als Kernstück einer Kommunikationsanlage verbunden - siehe hierzu auch EP-A-0 399 359. In einer zentralen Steuerungseinheit einer Kommunikationsanlage wird eine vermittlungstechnische Verarbeitung durch eine Anlagensoftware übernommen. Die peripheren Baugruppen weisen eine Baugruppensteuerung auf, deren Aufgabe in der Zuordnung belegter teilnehmerseitiger Übertragungskanäle zu ausgewählten Kanälen von Multiplexkanälen besteht. Die Steuerungsfunktionen der Baugruppensteuerung sind vorwiegend softwaremäßig implementiert.

Durch Fehler in der Baugruppensoftware oder in der Vermittlungstechnik kann es zu Halbwegen oder Doppelverbindungen kommen. Bei Halbwegen ist nur einer von zwei Übertragungskanälen für eine Gesprächsverbindung zwischen zwei Teilnehmeranschlüssen durchgeschaltet, so dass die betroffenen Teilnehmer entweder nur hören oder nur sprechen können und daher kein Gespräch möglich ist. Bei Doppelverbindungen sind zwei Teilnehmeranschlüsse jeweils einer Nachrichtenquelle oder einer Nachrichtensenke zugeordnet. Eine derartige Problematik tritt insbesondere bei Kommunikationsanlagen auf, bei denen Koppelnetz-Multiplexkanäle an teilnehmerseitige Übertragungskanäle der peripheren Baugruppen angeschlossen sind und über ein flexibles Übertragungskanalzuweisungsverfahren zugewiesen werden. Auch bei verteilten Steuerungen zum An- bzw. Abschalten von Verbindungswegen zwischen Endpunkten einer Kommunikationsanlage tritt diese Problematik auf.

Einstellfehler in vermittlungstechnischen Einheiten sind nicht zuletzt aufgrund ihres sporadischen Auftretens nur schwierig diagnostizier- und lokalisierbar. Verbindungswege durch das Koppelnetz und auszuwählende teilnehmerseitige Übertragungskanäle werden üblicherweise zentral mittels Datenbank Zugriffsroutinen ermittelt und gespeichert. Per Einstellmeldungen werden zugehörige Verbindungswegeeinstelldaten an ausführende verteilte Steuerungen weitergegeben. Die Verbindungswegeeinstelldaten werden von den ausführenden verteilten Steuerungen in eigene Arbeitsspeicher eingetragen. Bei weiteren Einstellungen, Umschaltungen oder Auslösungen werden die Verbindungswegeeinstelldaten beispielsweise zur Erstellung von Einstellmeldungen ausgelesen, die wiederum an periphere Baugruppen übermittelt werden. In der skizzierten Ablaufkette können Verbindungswegedaten verfälscht werden, woraus die oben genannten Fehlersituationen entstehen. Dies bedeutet beispielsweise, dass in einer Datenbank als belegbar vermerkte Übertragungskanäle noch nicht für eine erneute Belegung gezielt freigeschaltet wurden, sondern ohne gezielte Freischaltung erneut vergeben wurden.

Bislang wurden derartige Probleme dadurch gelöst, dass nach einer Meldung einer gestörten Verbindung durch einen Teilnehmer die Störungsursache auf bestimmte periphere Baugruppen eingegrenzt wurde und die zugeordnete Kommunikationsanlage per Hardwarerestart abgeschaltet und erneut hochgefahren wurde. Eine derartige Vorgehensweise birgt den Nachteil in sich, dass bei einer derartigen Störung alle Teilnehmeranschlüsse innerhalb einer Kommunikationsanlage von derartigen Fehlerbehebungsmaßnahmen betroffen sind.

Der vorliegenden Erfindung liegt die Aufgabe zugrunde, ein Verfahren zur effektiveren Störungsermittlung bei Verbindungswegeeinstellfehlern in vermittlungstechnischen Einrichtungen eines Kommunikationssystems anzugeben.

Diese Aufgabe wird erfindungsgemäß durch ein Verfahren mit den in Anspruch 1 angegebenen Merkmalen gelöst. Vorteilhafte Weiterbildungen des erfindungsgemäßen Verfahrens sind den Ansprüchen 2 bis 8 zu entnehmen.

Ein wesentlicher Aspekt des erfindungsgemäßen Verfahrens ist darin zu sehen, dass beispielsweise in einer Datenbank fälschlicherweise als belegbar vermerkte Übertragungskanäle gezielt lokalisiert und für eine erneute Belegung gezielt freigeschaltet werden können. Beim erfindungsgemäßen Verfahren wird dies dadurch erreicht, dass ein Testsequenzsender eine Testsequenz systemseitig an eine Steuerungseinheit für eine ausgewählte periphere Baugruppe übermittelt. Die Testsequenz wird dann über einen der peripheren Baugruppe zugeordneten und als belegbar vermerkten Übertragungskanal an einen Testsequenzempfänger übermittelt. Die vom Testsequenzsender übermittelte Testsequenz und die vom Testsequenzempfänger empfangene Testsequenz werden schließlich für eine Auswertung auf Übereinstimmung überprüft. Bei einer fehlenden Übereinstimmung wird der ausgewählte Übertragungskanal gezielt freigeschaltet. Das erfindungsgemäße Verfahren ist allgemein in Kommunikationssystemen anwendbar, beispielsweise mittels einer routinemäßig ablaufenden nicht betriebsstörenden Prüfung oder mittels eines gezielten Prüfauftrages für ausgewählte periphere Baugruppen.

Die Erfindung wird nachfolgend an einem Ausführungsbeispiel anhand der Zeichnung näher erläutert. Es zeigt
Figur 1 zur Veranschaulichung der Wirkungsweise des erfindungsgemäßen Verfahrens eine schematisiert dargestellte Anordnung mit einem Testsequenzsender, einer Steuerungseinheit für eine periphere Baugruppe, einer peripheren Baugruppe, einem Testsequenzempfänger und einer Auswerteeinrichtung,
Figur 2 eine gegenüber der Anordnung gemäß Figur 1 abgewandelte Variante mit einer in eine periphere Baugruppe integrierten Steuerungseinheit und
Figur 3 eine weitere gegenüber der Anordnung gemäß Figur 1 abgewandelte Variante mit einer in eine periphere Baugruppe integrierten Steuerungseinheit und einer integrierten Prüfeinrichtung.

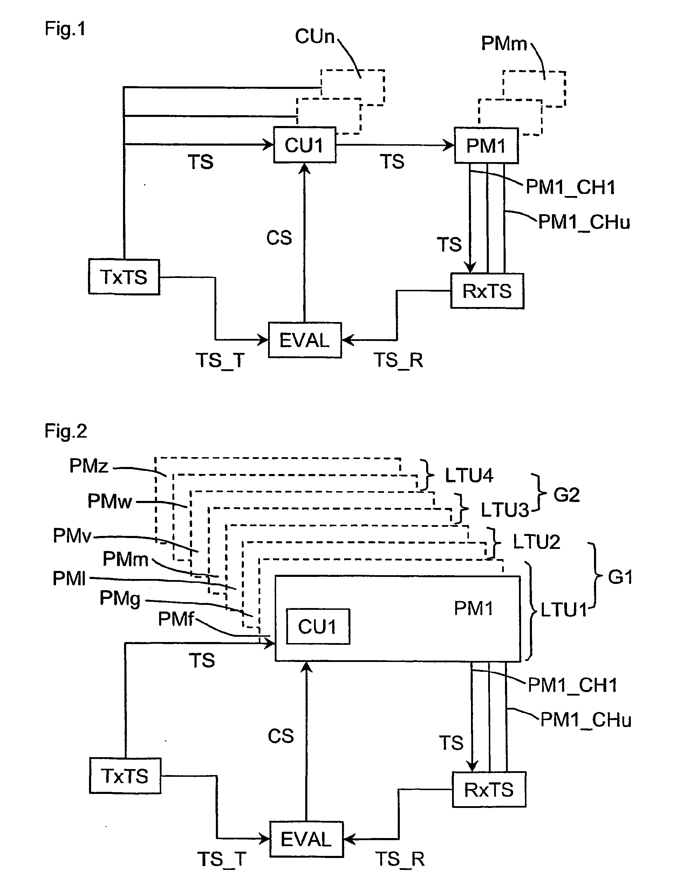

In Figur 1 ist eine Anordnung dargestellt mit einem Testsequenzsender TxTS, mehreren peripheren Baugruppen PM1 bis PMm, mehreren Steuerungseinheiten CU1 bis CUn für periphere Baugruppen, einem Testsequenzempfänger RxTS und einer Auswerteeinheit EVAL. Von dem Testsequenzempfänger TxTS wird eine Testsequenz TS an eine Steuerungseinheit CU1 einer ausgewählten peripheren Baugruppe PM1 übermittelt. Anschließend wird die Testsequenz TS von der Steuerungseinheit CU1 an die periphere Baugruppe PM1 weitergeleitet. Der peripheren Baugruppe PM1 sind mehrere periphere Übertragungskanäle PM1_CH1 bis PM1_CHu zugeordnet. Von diesen Übertragungskanälen wird ein Übertragungskanal PM1_CH1 für eine Überprüfung ausgewählt. In einer nicht näher dargestellten Datenbasis eines Kommunikationssystems wurde dieser Übertragungskanal zuvor als belegbar vermerkt.

Die Testsequenz TS wird nun über den ausgewählten teilnehmerseitigen Übertragungskanal PM1_CH1 an den Testsequenzempfänger RxTS übermittelt. In der Auswerteeinheit EVAL werden die vom Testsequenzempfänger TxTS übermittelte Testsequenz TS_T und die vom Testsequenzempfänger RxTS empfangene Testsequenz TS_R auf Übereinstimmung überprüft. Die Testsequenz TS ist beispielsweise durch eine Bitmusterfolge realisiert, deren Wert die Adresse der Baugruppe und eine Kennzeichnungsinformation für den ausgewählten Übertragungskanal wiedergibt. Hierdurch wird die Suche nach einem Verbindungswegeinstellungsfehler in einem Kommunikationssystem deutlich vereinfacht. Falls die übermittelte Testsequenz TS_T mit der empfangenen Testsequenz TS_R nicht übereinstimmt, so wird der ausgewählte Übertragungskanal PM1_CH1 per betriebstechnischer Anweisung gezielt freigeschaltet. Falls die übermittelte Testsequenz TS_T mit der empfangenen Testsequenz TS_R übereinstimmt, so ist die in der Datenbasis gespeicherte Information bezüglich der Belegbarkeit des ausgewählten Übertragungskanals TM1_CH1 korrekt, so dass keine gezielte Freischaltung per betriebstechnischem Befehl CS an die Steuerungseinheit CU1 für die ausgewählte periphere Baugruppe PM1 mehr notwendig ist.

Bei der in Figur 2 dargestellten Anordnung ist die Steuerungseinheit CU1 direkt in die ausgewählte periphere Baugruppe PM1 integriert. Dies bedeutet, dass die Testsequenz TS direkt vom Testsequenzsender TxTS an die ausgewählte periphere Baugruppe PM1 übermittelt wird und von dieser zum Testsequenzempfänger RxTS über den zu überprüfenden Übertragungskanal PM1_CH1 gespiegelt wird.

In vorteilhafter Weise wird bei einem Kommunikationssystem mit mehreren Anschlusseinheitengruppen mit einem in mehrere Anschlusseinheitengruppen G1 und G2 eingeteilten Anschlusseinheiten LTU1 bis LTU4, denen periphere Baugruppen PM1 bis PMf, PMg bis PMl, PMm bis PMv, PMw bis PMz zugeordnet sind, je Anschlusseinheitengruppe G1 und G2 jeweils eine periphere Baugruppe für eine Überprüfung ausgewählt. Vorzugsweise wird eine periphere Baugruppe gemäß einer definierten Zeitplanung wiederholt für eine Überprüfung ausgewählt.

Bei peripheren Baugruppen mit mehreren nicht näher dargestellten Teilnehmeranschlusseinrichtungen können die Übertragungskanäle den Teilnehmeranschlusseinrichtungen zugeordnet bzw. von diesen verwaltet werden. Vorzugsweise wird mit der Testsequenz eine die jeweilige periphere Baugruppe kennzeichnende Adressinformation über einen den Teilnehmeranschlusseinrichtungen jeweils zugeordneten Übertragungskanal an den Testsequenzempfänger übermittelt. Wird zusätzlich mit der Testsequenz eine Information übermittelt, die eine Überprüfungsart kennzeichnet, so können auf periphere Baugruppen und auf Teilnehmeranschlusseinrichtungen gerichtete Überprüfungen unterschieden werden.

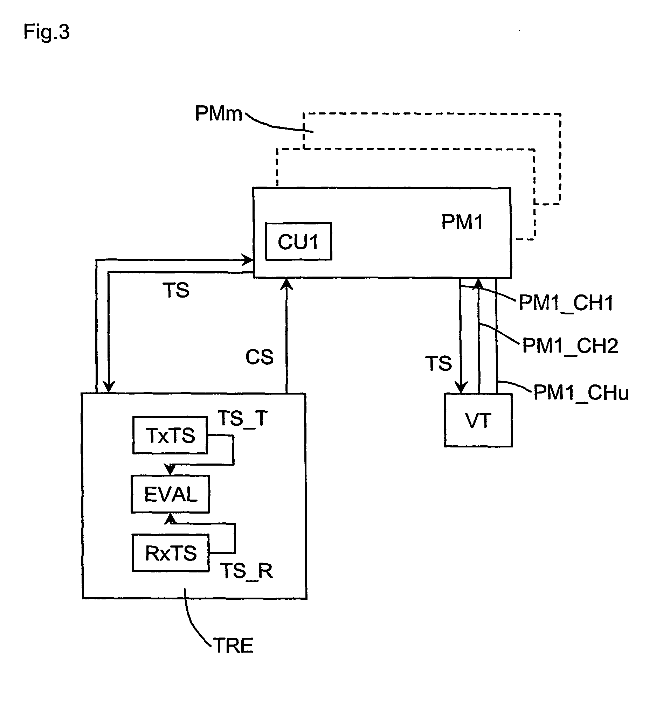

In Figur 3 ist eine weitere Variante der in Figur 1 dargestellten Anordnung abgebildet, bei welcher der Testsequenzsender TxTS, der Testsequenzempfänger RxTS und die Auswerteeinrichtung EVAL in einem Prüfbaustein TRE zusammengefasst sind. Ähnlich wie bei der Anordnung in Figur 2 ist bei der in Figur 3 dargestellten Anordnung die Steuerungseinheit CU1 in die zugeordnete periphere Baugruppe PM1 integriert. Die Testsequenz TS wird bei der in Figur 3 dargestellten Anordnung von dem Prüfungsbaustein TRE an die ausgewählte periphere Baugruppe PM1 übermittelt. Anschließend wird die Testsequenz TS von der peripheren Baugruppe PM1 über einen ausgewählten und als belegbar vermerkten Übertragungskanal PM1_CH1 an einen virtuellen Teilnehmeranschluss VT übermittelt und von diesem über einen weiteren Übertragungskanal PM1_CH2 zunächst zur ausgewählten peripheren Baugruppe PM1 und dann zum Prüfungsbaustein TRE zurückgespielt. Die Auswertung der vom Testsequenzsender TxTS übermittelten Testsequenz TS_T und der vom Testsequenzempfänger RxTS empfangenen Testsequenz TS_R in der Auswerteeinheit EVAL erfolgt bei der in Figur 3 beschriebenen systemseitigen Anordnung des Testsequenzempfängers RxTS entsprechend den vorangehend beschriebenen Fällen.

Die Anwendung des erfindungsgemäßen Verfahrens ist nicht auf die hier beschriebenen Ausführungsbeispiele beschränkt.

## Patentansprüche

1. Verfahren zur Überprüfung von als belegbar vermerkten Übertragungskanälen in einem Kommunikationssystem mit peripheren Baugruppen zur Bereitstellung von teilnehmerseitigen Übertragungskanälen, bei dem
- ein Testsequenzsender (TxTS) eine Testsequenz (TS) systemseitig an eine Steuerungseinheit (CU1) für eine ausgewählte periphere Baugruppe (PM1) übermittelt,
- die Testsequenz (TS) über einen der peripheren Baugruppe (PM1) zugeordneten, als belegbar vermerkten Übertragungskanal (PM1_CH1) an einen Testsequenzempfänger (RxTS) übermittelt wird,
- die vom Testsequenzsender (TxTS) übermittelte Testsequenz (TS_T) und die vom Testsequenzempfänger (RxTS) empfangene Testsequenz (TS_R) für eine Auswertung auf Übereinstimmung überprüft werden,
wobei der ausgewählte Übertragungskanal (PM1_CH1) bei einer fehlenden Übereinstimmung gezielt freigeschaltet wird.

2. Verfahren nach Anspruch 1,
**dadurch gekennzeichnet,**
**daß** die Testsequenz (TS) bei einer systemseitigen Anordnung des Testsequenzempfängers (RxTS) über einen weiteren Übertragungskanal (PM1_CH2) an den Testsequenzempfänger übermittelt wird.

3. Verfahren nach einem der Ansprüche 1 oder 2,
**dadurch gekennzeichnet,**
**daß** bei einem Kommunikationssystem mit in mehrere Anschlußeinheitengruppen (G1, G2) eingeteilten Anschlußeinheiten (LTU1, LTU2, LTU3, LTU4), denen periphere Baugruppen (PM1-PMz) zugeordnet sind, je Anschlußeinheitengruppe (G1, G2) jeweils eine periphere Baugruppe für eine Überprüfung ausgewählt wird.

4. Verfahren nach einem der Ansprüche 1 bis 3,
**dadurch gekennzeichnet,**
**daß** eine periphere Baugruppe (PM1-PMz) gemäß einer Zeitplanung wiederholt für eine Überprüfung ausgewählt wird.

5. Verfahren nach einem der Ansprüche 1 bis 4,
**dadurch gekennzeichnet,**
**daß** mit der Testsequenz (TS) eine die jeweilige periphere Baugruppe (PM1-PMz) kennzeichnende Adreßinformation über einen der jeweiligen peripheren Baugruppe zugeordneten Übertragungskanal an den Testsequenzempfänger (RxTS) übermittelt wird.

6. Verfahren nach einem der Ansprüche 1 bis 5,
**dadurch gekennzeichnet,**
**daß** bei einer peripheren Baugruppe (PM1-PMz) mit mehreren Teilnehmeranschlußeinrichtungen die Testsequenz (TS) über einen den Teilnehmeranschlußeinrichtungen jeweils zugeordneten Übertragungskanal an den Testsequenzempfänger (RxTS) übermittelt wird.

7. Verfahren nach Anspruch 6,
**dadurch gekennzeichnet,**
**daß** mit der Testsequenz (TS) eine die jeweilige periphere Baugruppe (PM1-PMz) kennzeichnende Adreßinformation über einen den Teilnehmeranschlußeinrichtungen jeweils zugeordneten Übertragungskanal an den Testsequenzempfänger (RxTS) übermittelt wird.

8. Verfahren nach einem der Ansprüche 6 oder 7,
**dadurch gekennzeichnet,**
**daß** für eine Unterscheidung zwischen auf periphere Baugruppen (PM1-PMz) und auf Anschlüsse gerichteten Überprüfungen mit der Testsequenz (TS) eine die Überprüfungsart kennzeichnende Information übermittelt wird.

## Claims

1. Method for checking transmission channels marked as seizable in a communications system with peripheral modules for the provision of subscriber-end transmission channels, in which
- a test sequence transmitter (TxTS) transmits a test sequence (TS) on the system side to a control unit (CU1) for a selected peripheral module (PM1),
- the test sequence (TS) is transmitted via a transmission channel (PM1_CH1) marked as seizable and allocated to the peripheral module (PM1) to a test sequence receiver (RxTS),
- the test sequence (TS_T) transmitted by the test sequence transmitter (TxTS) and the test sequence (TS_R) received by the test sequence receiver (RxTS) are checked to evaluate correspondence,
whereby, in the absence of correspondence, the selected transmission channel (PM1_CH1) is specifically released.

2. Method according to claim 1,
**characterized in that**,
in the case of a system-side arrangement of the test sequence receiver (RxTS), the test sequence (TS) is transmitted via a further transmission channel (PM1_CH2) to the test sequence receiver.

3. Method according to one of claims 1 or 2,
**characterized in that**,
in a communications system with line trunk units (LTU1, LTU2, LTU3, LTU4) divided up into a plurality of line trunk unit groups (G1, G2), to which peripheral modules (PM1-PMz) are allocated, one peripheral module is selected in each case per line trunk unit group (G1, G2) to carry out a check.

4. Method according to one of claims 1 to 3,
**characterized in that**
a peripheral module (PM1-PMz) is selected repeatedly in accordance with a defined scheduling to carry out a check.

5. Method according to one of claims 1 to 4,
**characterized in that**
address information identifying the relevant peripheral module (PM1-PMz) is transmitted with the test sequence (TS) via a transmission channel allocated to the relevant peripheral module to the test sequence receiver (RxTS).

6. Method according to one of claims 1 to 5,
**characterized in that**,
in the case of a peripheral module (PM1-PMz) with a plurality of subscriber line unit devices, the test sequence (TS) is transmitted via a transmission channel in each case allocated to the subscriber line unit devices to the test sequence receiver (RxTS).

7. Method according to claim 6,
**characterized in that**
address information identifying the relevant peripheral module (PM1-PMz) is transmitted with the test sequence (TS) via a transmission channel in each case allocated to the subscriber line unit devices to the test sequence receiver (RxTS).

8. Method according to one of claims 6 or 7,
**characterized in that**,
in order to distinguish between checks intended for peripheral modules (PM1-PMz) and checks intended for line connections, information identifying the check type is transmitted with the test sequence (TS).

## Revendications

1. Procédé de contrôle de canaux de transmission indiqués comme pouvant être occupés dans un système de communication ayant des modules périphériques pour mettre à disposition des canaux de transmission côté abonné, dans lequel
- un émetteur (TxTS) de séquence de test transmet une séquence (TS) de test côté système à une unité (CU1) de commande pour un module (PM1) périphérique sélectionné,
- la séquence (TS) de test est transmise à un récepteur (RxTS) de séquence de test, par un canal (PM1_CH1) de transmission indiqué comme pouvant être occupé et affecté au module (PM1) périphérique,
- la séquence (TS_T) de test transmise par l'émetteur (TxTS) de séquence de test et la séquence (TS_R) de test reçue par le récepteur (RxTS) de séquence de test sont contrôlées pour exploiter leur concordance,
le canal (PM1_CH1) de transmission sélectionné étant libéré à dessein si la concordance fait défaut.

2. Procédé suivant la revendication 1,
**caractérisé**
**en ce que** la séquence (TS) de test est transmise dans un agencement, côté système, du récepteur (RxTS) de séquence de test au récepteur de séquence de test par un autre canal (PM1_CH2) de transmission.

3. Procédé suivant la revendication 1 ou 2,
**caractérisé**
**en ce que** dans un système de communication ayant des unités (LTU1, LTU2, LTU3, LTU4) de connexion réparties en plusieurs groupes (G1, G2) d'unités de connexion et auxquelles sont affectés des modules (PM1 à PMz) périphériques, dans chaque groupe (G1, G2) d'unités de connexion respectivement, un module périphérique est sélectionné pour le contrôle.

4. Procédé suivant l'une des revendications 1 à 3,
**caractérisé**
**en ce qu'**un module (PM1 à PMz) périphérique est sélectionné pour un contrôle de manière répétée suivant une planification dans le temps.

5. Procédé suivant l'une des revendications 1 à 4,
**caractérisé**
**en ce qu'**avec la séquence (TS) de test, une information d'adresse caractérisant le module (PM1 à PMz) périphérique respective est transmise au récepteur (RxTS) de séquence de test par un canal de transmission affecté au module périphérique respectif.

6. Procédé suivant l'une des revendications 1 à 5,
**caractérisé**
**en ce que**, pour un module (PM1 à PMz) périphérique ayant plusieurs dispositifs de connexion d'abonnés, la séquence (TS) de test est transmise au récepteur (RxTS) de test par un canal de transmission affecté respectivement au dispositif de connexion d'abonné.

7. Procédé suivant la revendication 6,
**caractérisé**
**en ce qu'**avec la séquence (TS) de test, une information d'adresse caractérisant le module (PM1 à PMz) périphérique respectif est transmise au récepteur (RxTS) de séquence de test par un canal de transmission affecté respectivement au dispositif de connexion d'abonnés.

8. Procédé suivant l'une des revendications 6 ou 7,
**caractérisé**
**en ce que**, pour effectuer une distinction entre des contrôles visant des modules (PM1 à PMz) périphériques et visant des connexions à l'aide de la séquence (TS) de test, on transmet une information caractérisant le type de contrôle.
